# EUROPEAN PATENT SPECIFICATION

(11) **EP 2 783 923 B1**
(45) Date of publication and mention of the grant of the patent: **18.05.2016**
(21) Application number: 13161578.3
(22) Date of filing: 28.03.2013
(51) Int. Cl.: B60R 21/215, B60R 21/203

(54) **Airbag housing assembly**
Airbag-Gehäuseeinrichtung
Boîtier d'airbag

(43) Date of publication of application: 01.10.2014
(73) Proprietor: Volvo Car Corporation, 40531 Göteborg (SE)
(72) Inventor: Bergenheim, Eddy, 426 69 Västra Frölunda (SE); Bodebratt, Daniel, 41660 Göteborg (SE); Saslecov, Venti, 42244 Göteborg (SE)
(74) Representative: Kraenzmer, Martin

(56) References cited:
- EP-A2- 0 881 129
- DE-A1- 19 535 980
- DE-B3-102011 122 465
- JP-A- H09 150 697
- US-A1- 2008 036 184

## Description

### TECHNICAL FIELD

The present disclosure relates to an airbag cover for use in an airbag housing assembly. The present invention relates to an airbag housing assembly, and to a vehicle. comprising the airbag housing assembly. The present invention also relates to a method for assembling an airbag housing assembly.

### BACKGROUND

A modern vehicle comprises a number of airbags intended to protect a user of the vehicle in case of a collision. For example, a steering wheel assembly of the vehicle may comprise a steering wheel airbag intended to protect the driver. Such an airbag is usually contained in an airbag housing assembly comprising an airbag cover and a casing. The airbag cover may comprise a side wall, a top portion and a peripheral portion, the side wall forming an at least substantially closed circumference, the top portion forming a cover of the at least substantially closed circumference, and the peripheral portion extending external of the side wall along at least a part of a circumference of the side wall, thereby forming an extension of the top portion. If a force is applied to the peripheral portion, i.e. to the airbag cover outside the side wall, there is a risk that the peripheral portion will bend towards the side wall. Such a force may e.g. be applied when the user of the vehicle wants to activate a horn arrangement, or it may be applied unintentionally by the user.

Document EP 1 456 064 B1 solves this problem by allowing the peripheral edge of the airbag cover to abut on a locating unit provided on the spokes adjacent to the rim. However, there is still a large unsupported peripheral portion of the airbag cover. Further, the design possibilities of the airbag cover are restricted by the locating unit being located on the spoke and close to the rim.

Document EP 0 842 825 A1 discloses an airbag cover comprising a top of relatively soft plastics supported by a base part of relatively stiff plastics. The peripheral edge of the airbag cover is supported by the steering wheel rim on one side and by the hub portion of the steering wheel on the other side.

However, if the force is applied to the peripheral portion but not close to the peripheral edge for an airbag cover according to EP 0 842 825 A1, there is anyway a potential risk that the peripheral portion may be deformed. Further, the design possibilities of the airbag cover are restricted, since the peripheral edge extends all the way out to the steering wheel rim.

There is thus a desire to provide an improved airbag cover.

Document US 2008/0036184 A1 relates to an airbag cover, wherein at least one pair of tear lines is provided on a double-wall portion, with an inner side wall and an outer side wall. The tear line provided on the inner side wall is formed as a slit. The tear line provided on the outer side wall is formed as a groove. Therefore, strength of the double-wall portion is reduced to tear the tear lines unfailingly and torn module cover can be opened unfailingly as a deployment door by an inflating airbag. In an embodiment a plurality of limbs is provided between the inner side wall and the outer side wall, so as to bridge the two side walls.

Document JPH09-150697 A discloses an airbag housing assembly comprising an airbag cover and a casing forming a bottom of said airbag housing assembly according to the preamble of claim 1.

### SUMMARY

The object of the present disclosure is to overcome or ameliorate at least one of the disadvantages of the prior art, or to provide a useful alternative.

It is desirable to make the design possibilities of the airbag cover independent of the location of the spokes, the location of the steering wheel rim and/or the size of the airbag housing.

It is further desirable to minimize or prevent the risk of deforming the peripheral portion of the airbag cover, if applying a force to the peripheral portion. Preferably, both the risk of elastic and permanent deformation is prevented.

It is also desirable to provide an airbag cover, which is stable, when touched by the user, and yet allows an efficient deployment of the airbag.

The object above may be achieved by the subject-matter of claim 1.

According to the present invention there is provided an airbag housing assembly with an airbag cover comprising a side wall, a top portion and a peripheral portion, the side wall forming an at least substantially closed circumference, the top portion forming a cover of the at least substantially closed circumference, the peripheral portion extending external of the side wall along at least a part of a circumference of the side wall, thereby forming an extension of the top portion, wherein the airbag cover further comprises at least one abutment member, which extends between an underside of the peripheral portion and the side wall, such that the peripheral portion abuts against the side wall via the at least one abutment member, at least when a force is applied to the peripheral portion.

Thereby the at least one abutment member is adapted to prevent the peripheral portion of the airbag cover from being, at least locally, pressed against the side wall, if a force is applied to the peripheral portion, i.e. to the airbag cover outside of the side wall. The abutment member is adapted to transfer the force applied to the peripheral portion to the side wall and/or to a side portion of a casing forming a bottom of the airbag housing assembly. Such a force may e.g. be applied when the user of the vehicle wants to activate a potential horn arrangement or the force may be applied unintentionally by the user of the vehicle. Typically the force is applied substantially perpendicular to the surface of the peripheral portion, but it may also be applied at an oblique angle. Preferably, the peripheral portion abuts against the side wall via the at least one abutment member also when no force is applied.

By using an airbag housing assembly according to the invention, it is possible to use the airbag cover as an activator for the horn arrangement, and yet the airbag cover provides a solid feeling when the user touches it. The horn can thus be activated in a distinct way, If, instead, the peripheral portion would have been allowed to give way, the user could get a spongy feeling and it could take longer time before the horn would be actually activated.

Further, with an airbag housing assembly according to the invention, it is possible to provide a stable airbag cover, which yet allows an efficient deployment of the airbag.

Moreover, there is a large freedom for design possibilities when designing the airbag cover.

Typically the side wall forms a closed circumference and the top portion forms a cover of the closed circumference. However, in some embodiments of the invention, the side wall may have a U-shape and the remaining portion of the closed circumference may be constituted by a portion of the top portion. The side wall and the top portion may form a substantially right angle to each other, where they meet. However, at an upper portion of the airbag cover, the upper portion referring to the portion being closest to a windscreen of the vehicle, when the steering wheel is in a neutral position, the peripheral portion may, at least partly, be substantially parallel to the side wall.

The peripheral portion may extend external of the side wall along the whole circumference of the side wall. The peripheral portion may also extend along one or more portions of the circumference of the side wall.

The underside of the peripheral portion is defined as the side of the peripheral portion facing the side wall. The underside is normally hidden to the user of the vehicle.

The airbag housing assembly according to the invention may be used to cover an airbag comprised in the steering wheel assembly. As an alternative, the airbag housing assembly may be used to cover a knee airbag, arranged to protect the knees of the driver or a passenger in case of a collision or for a side-airbag. The knee airbag may be hidden behind an interior panel of the vehicle and only be activated in case of a collision, the interior panel in that case forming the airbag cover. Alternatively, the knee airbag may have its own airbag cover. Further, the airbag housing assembly according to the invention may be used to cover a side airbag. In general terms, the airbag housing assembly according to the invention is suitable for any airbag housing assembly having a peripheral portion extending external of the side wall along at least a part of a circumference of the side wall.

A cross-section of the peripheral portion may be substantially straight or may be curved by up to about 90 degrees. A cross-section of the side wall is normally straight or substantially straight.

When seen along the periphery of the airbag cover, there may be provided a plurality of abutment members. They may be located by an interspace in the range of 5 to 150 mm, preferably 10 to 50 mm. In an embodiment, the abutment members are interspaced by a distance corresponding to the width of an average human thumb. The abutment members may be closer to each other at portions of the airbag cover, where it is more likely that the user could happen to apply pressure to the peripheral portion and/or where it is more likely that high thermal tension may be built up. Further, there may be portions of the periphery of the airbag cover having no abutment members, e.g. in the region of a hinge-forming portion of the airbag cover, the hinge-forming portion functioning as a hinge when the airbag cover is opened during inflation of the airbag. Typically one or two hinge-forming portions are used. One hinge-forming portion may be used when the airbag cover opens as one unit. Two hinge-forming portions may be used when the airbag cover opens as two portions. Three hinge-forming portions may be used when the airbag cover opens as three portions etc. Alternatively, the abutment member may be located below the location where the hinge is formed. As another alternative, the abutment member may at least in the hinge-forming portion of the airbag cover comprise a weakening zone and/or be easily deformable during deployment of the airbag.

The at least one abutment member may be an integral part of the airbag cover, e.g. by being manufactured as one unit. The at least one abutment member may be an integral part of the side wall and/or the peripheral portion. The airbag cover may be made of thermo-moulded plastics. In that case the at least one abutment member may be moulded at the same time, and in the same mould, as the rest of the airbag cover.

The peripheral portion adapted to be supported by the abutment member has a width w and, in an embodiment, abuts via the at least one abutment member along at least 30%, preferably at least 50%, more preferably at least 70% and most preferably at least 90% of the width w. This helps the at least one abutment member to prevent the peripheral portion of the airbag cover from being pressed against the side wall, if a force is applied to the peripheral portion.

The peripheral portion abutting via the at least one abutment member may comprise a free peripheral edge, i.e. the peripheral edge is not supported by an abutment member. Thereby the airbag cover can be designed in an aesthetically pleasing way, without being restricted by that the peripheral edge itself should be supported, as is known from some prior art airbag covers. The width w of the peripheral portion is measured along the surface of the upper side of the surface, i.e. the side facing away from the side wall.

The at least one abutment member may further be adapted to also function as a retaining member, adapted to prevent the peripheral portion from moving in a direction away from the side wall. For example, if the vehicle is exposed to sunshine, there may be thermal tension built up in the airbag cover, especially if the airbag cover is made of a material, e.g. plastics, having a dark colour, e.g. black. Such thermal tension will induce an internal force in the airbag cover, which could cause the peripheral portion to bend away from the side wall. However, thanks to the abutment member also functioning as a retaining member, it will be able to retain the peripheral portion in the intended position. The abutment member thus has a dual function: to prevent the peripheral portion from moving in a direction towards the side wall, i.e. the abutment function, and to prevent the peripheral portion from moving in a direction away from the side wall, i.e. the retaining function.

The at least one abutment member, the side wall or the peripheral portion may comprise a first snap fit member adapted for connection to another of the at least one abutment member, the side wall or the peripheral portion comprising a corresponding second snap fit member. The first snap fit member may thus be adapted to connect, i.e. to snap fit, into the second snap fit member. The snap-fit members make it possible to obtain the connection without using any additional fastening member and without using a specialized tool. The snap fit members may be integrally formed with their respective abutment member, side wall or peripheral portion.

The airbag cover may further comprise at least one split line formed in the side wall, preferably at, or adjacent to, an upper edge of the side wall, i.e. the edge where the side wall meets the top portion, the at least one abutment member abutting against the side wall at least in a region below the split line in the side wall. By adjacent is typically meant being located anywhere between 0 and 20 mm from the upper edge. The split line offers a pre-determined breaking zone defined in the side wall. When the airbag is inflated, the side wall is prepared such that it breaks in the split line. The split line may have less thickness than the adjacent wall zones or it may comprise holes. Typically, substantially the whole circumference of the side wall comprises a split line except for the above-mentioned hinge-forming portions, e.g. one, two, three, four or more hinge-forming portions. A plurality of split lines may be used one after each other, functioning as a perforation.

Further, also the at least one abutment member may comprise a split line, e.g. a weakening zone. The split line may have less thickness than the adjacent wall zones or it may comprise a hole. In the same way as for the side wall, the split line offers a predetermined breaking zone. The split line of the at least one abutment member is preferably arranged at a location corresponding to the split line of the adjacent side wall, such that when the airbag is inflated, the side wall and the at least one abutment member split at corresponding locations.

The at least one abutment member may comprise at least two parts connectable to each other, e.g. being snap-fittable to each other or adapted to be slid into each other, such that when the two parts are connected the peripheral portion abuts against the side wall via the two parts. The division between the two parts is preferably arranged at a location corresponding to the split line of the adjacent side wall, such that when the airbag is inflated, the side wall and the at least one abutment member break at corresponding locations.

The split line may, as an alternative or a complement to being formed in the side wall as described above, be formed in the airbag cover, e.g. in the central portion, in that case preferably adjacent to the side wall. By adjacent is then meant being located anywhere between 0 and 20 mm from the side wall. In that case, there is no need for a split line in the abutment members, since the abutment members would be located entirely outside of the split line.

The at least one abutment member may be substantially two-dimensional, the surface of the at least one substantially two-dimensional abutment member being substantially perpendicular to a surface of the side wall and/or a surface of the peripheral portion. A substantially two-dimensional object has a flat surface having a length and/or a width, which are substantially larger than its thickness. The surface of the substantially two-dimensional abutment member may be generally triangular or shaped as a sector of a circle in order to fit in between the underside of the peripheral portion and the side wall. The angle of one corner of the triangle is preferably adapted, such that it fits in the corner, where side wall and the peripheral portion meet. Typically this is an acute or a right angle. Similarly, if the surface is shaped like the sector of the circle, the radius of the circle is adapted to the curvature of the peripheral portion. Purely as an example, a substantival two-dimensional abutment member may have a thickness between 0 and 2 mm, and a length and width of between 5 and 50 mm.

As an alternative abutment member, or as an additional abutment member, the abutment member may comprise a prop extending between the side wall and the underside of the peripheral portion. The prop may be in the form of a pillar or a beam. It may have the shape of a cylinder. It may have an arbitrary cross-section, e.g. circular, elliptic, square or polygonal. The prop-shaped abutment member preferably extends from a position of the peripheral portion being a distance of at least 30%, preferably at least 50%, more preferably at least 70% and most preferably at least 90% of the width w away from the point where the peripheral portion meets the side wall. Similarly, the prop-shaped abutment member may be connected to the side wall at a point being a distance of at least 30%, preferably at least 50%, more preferably at least 70% and most preferably at least 90% of the width w away from the point where the peripheral portion meets the side wall. A suitable position of the prop-shaped abutment member is a position corresponding to a free edge of the substantially two-dimensional surface of the abutment member.

The casing may be made of thermo-moulded plastics, similar to the cover. As an alternative, the casing may be made of metal.

The side portion of the casing and/or the peripheral portion may be adapted to snap fit with the at least one abutment member. The snap-fit makes it possible to obtain the connection without using any additional fastening member and without using a specialized tool. Alternatively, they may slide onto each other.

According to the present invention, there is provided a vehicle comprising a steering wheel assembly, an airbag, an airbag cover as described above and/or an airbag housing assembly as described above, the airbag being located in the steering wheel assembly of the vehicle. The vehicle may be a car, a motorcycle, a van, a lorry, a truck, a bus or any other vehicle adapted to move on a road, a track and/or off-road. The airbag cover of the invention is also suitable for a vehicle adapted to move on rails, a vessel or an aeroplane.

According to the present invention, there is provided a method of assembling an airbag housing assembly as described above, the airbag housing assembly comprising an airbag cover as described above and a casing as described above forming a bottom of the airbag housing assembly, the method comprising:
- putting the airbag cover onto the casing or vice versa, such that at least a part of a peripheral portion of the airbag cover passes outside of a side portion of the casing, and a side wall of the airbag cover, which faces the part of the peripheral portion, passes inside of the side portion of the casing,
- attaching the side wall of the airbag cover to the side portion of the casing, e.g. by means of welding, gluing or an attachment means, and
- attaching at least one abutment member, which is located at an underside of the 5 peripheral portion, to the side portion of the casing, e.g. by snap fitting or sliding into each other.

### BRIEF DESCRIPTION OF THE DRAWINGS

The present invention will hereinafter be further explained by means of non-limiting examples with reference to the appended drawings wherein:
- Fig. 1: is a schematic view of a vehicle provided with an airbag cover of an airbag housing assembly according to the invention,
- Fig. 2a: is a schematic view of an airbag housing assembly according to the invention in a perspective top view,
- Fig. 2b: is a schematic view of the airbag housing assembly in a side view,
- Fig. 2c: is a schematic view of the airbag housing assembly in a perspective bottom view,
- Fig. 3: is a cross-sectional view along line III - III of Figure 2a showing the airbag housing during assembling,
- Fig. 4: is a cross-sectional view along line III - III of Figure 2a showing the airbag housing when assembled,
- Fig. 5: is a cross-sectional view along line V - V of Figure 4,
- Fig. 6a: illustrates a cross-section of a portion of an abutment member,
- Fig. 6b: illustrates a cross-section of a portion of an alternative abutment member,
- Fig. 6c: illustrates a cross-section of a portion of yet an alternative abutment member, and
- Fig. 7: illustrates the airbag housing assembly during deployment of the airbag.

It should be noted that the appended drawings are not necessarily drawn to scale and that the dimensions of some features of the present invention may have been exaggerated for the sake of clarity.

### DETAILED DESCRIPTION

The invention will, in the following, be exemplified by embodiments. It should however be realized that the embodiments are included in order to explain principles of the invention and not to limit the scope of the invention, defined by the appended claims. Details from two or more of the embodiments may be combined with each other.

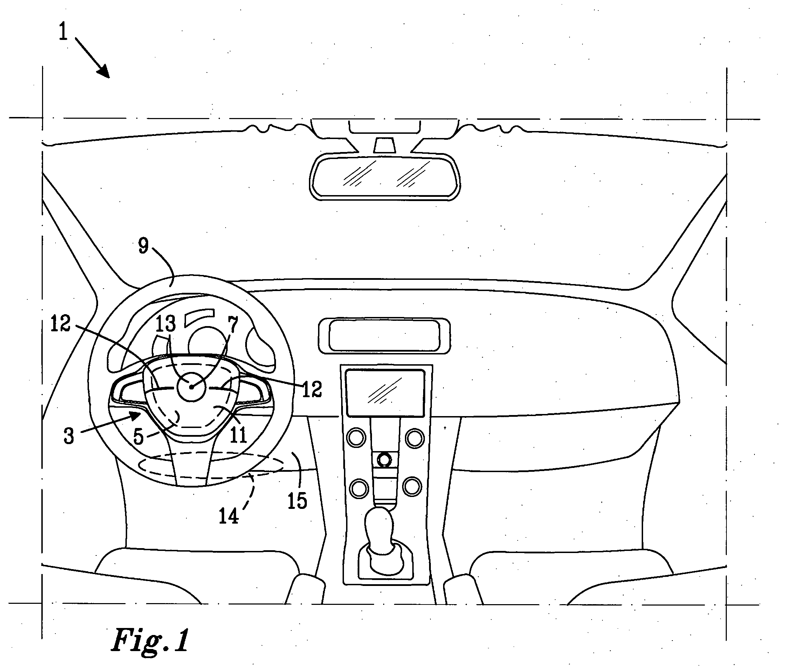

Figure 1 schematically illustrates a portion of a vehicle 1, here a car, as seen from the passenger compartment. The vehicle 1 comprises a number of airbags intended to protect the user or users of the vehicle in case of a collision. In particular, a steering wheel assembly 3 of the vehicle 1 comprises a steering wheel airbag 5 intended to protect the driver e.g. in case of a frontal collision. The steering wheel airbag 5 is located at a hub 7 of a steering wheel 9. The steering wheel airbag 5 is covered by an airbag cover 11. The airbag cover 11 may be provided with at least one predefined weakening zone 12, which may be "hidden" as a decorative element. The airbag cover 11 may further comprise another decorative element in the form of a logo 13 e.g. of the car manufacturer. In addition, or as an option, the steering wheel assembly 3 may be provided with a horn arrangement, which is adapted to be activated by applying a force to the airbag cover 11. As a further option, the vehicle 1 may be provided with a knee airbag 14, indicated by a dashed line, arranged to protect the knees of a driver or a passenger in case of a collision. The knee airbag 14 is hidden behind an interior panel 15 of the vehicle and is activated in case of a collision, a portion of the interior panel 15 forming the airbag cover. Alternatively, the knee airbag 14 may have its own airbag cover.

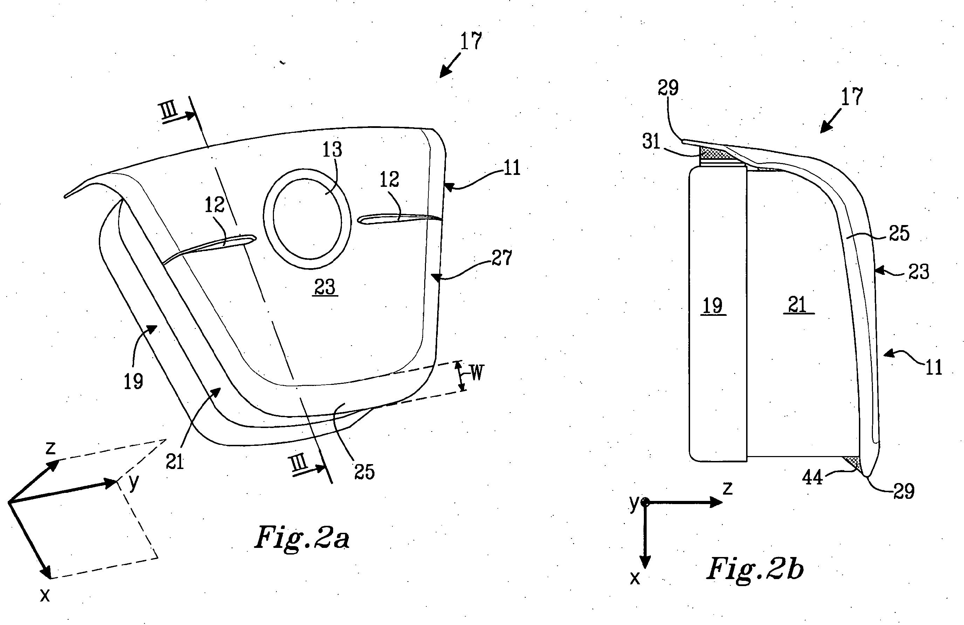

Figures 2a-2c schematically illustrate an airbag housing assembly 17 according to the invention in a perspective top view, a side view and a perspective bottom view. The airbag housing assembly 17 comprises the airbag cover 11 and a casing 19 forming a bottom of the airbag housing assembly 17. The casing 19 and the airbag cover 11 house the steering wheel airbag 5, which is located inside the airbag housing assembly 17, and thus not seen in Figures 2a-c.

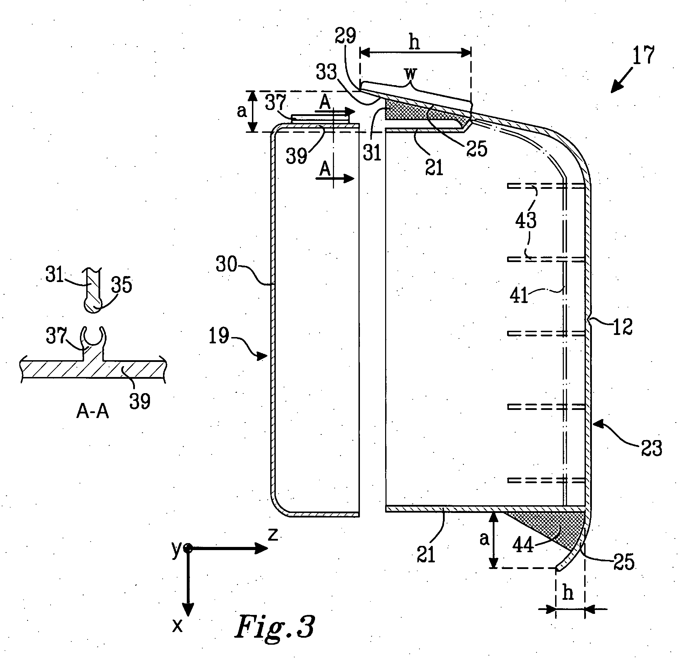

The airbag cover 11 comprises a side wall 21, a top portion 23 and a peripheral portion 25. The side wall 21 forms a closed circumference and the top portion 23 forms a cover of the closed circumference. The peripheral portion 25 extends external of the side wall 21 along at least a part of the circumference, in this case along the whole circumference. The peripheral portion 25 thereby forms an extension of the surface of the top portion 23, which surface faces a potential user of the vehicle 1. The peripheral portion 25 and the top portion 23 form a surface visible by the user of the vehicle 1. Therefore, an upper side 27 of the peripheral portion 25, i.e. the side facing away from the side wall 21, and the top portion 23 are usually formed in an aesthetically pleasing way. They may comprise the decorative elements, such as the predefined weakening zone 12 and the logo 13 of the car manufacturer. The top portion 23 and the side wall 21 together with the casing 19, form a housing for the steering wheel airbag 5, such that the steering wheel airbag 5 is contained in the housing. Figure 2a-c further illustrate abutment members 31, 43, 44 which are described below in conjunction with Figures 3-5.

The peripheral portion 25 ends by a peripheral edge 29, i.e. the peripheral edge 29 is furthest away from the top portion 23. The peripheral portion 25 has a width w, which is measured along the surface of the upper side 27 of the peripheral portion 25. The width w is thus the shortest distance along the surface between a location, where the top portion 23 meets the side wall 21, and the peripheral edge 29 of the peripheral portion 25. The width w varies along the circumference of the side wall 21. In the illustrated embodiment, the largest width w is provided at an upper portion of the airbag cover 11, the upper portion referring to the portion being closest to a windscreen of the vehicle 1, when the steering wheel 9 is in a neutral position, as illustrated in Figure 1.

Figures 2a to 2c further illustrate a coordinate system of the airbag cover 11, which is used in the further description. The x-axis runs along a thought bottom surface of the casing 19. The y-axis also runs along the thought bottom surface of the casing 19, but perpendicularly to the x-axis. In the embodiment illustrated in Figure 1, the y-axis thus runs in the width dimension of the vehicle 1. The z-axis runs along the height dimension of the side wall 21, perpendicularly to both the x-axis and the y-axis. In the embodiment illustrated in Figure 1, the z-axis thus points out of the steering wheel 9, more or less towards a potential driver of the vehicle 1. In the embodiment of Figures 2a-2c, the airbag cover 11 comprises a large substantially flat surface in a plane parallel to the x-y-plane.

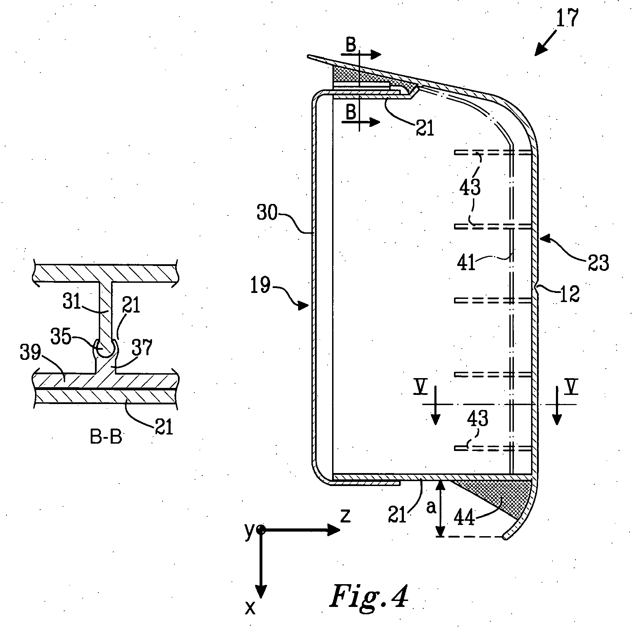

Figures 3 and 4 show a cross-section along line III - III of Figure 2a, i.e. along the direction of the x-axis. Figure 3 shows the airbag cover 11 and the casing 19 during assembling and Figure 4 when assembled.

The width w of the peripheral portion 25 is, as mentioned above, measured along the surface of the upper side 27 of the surface, i.e. the side facing away from the side wall 21. For the portion of the airbag cover 11 being directed towards a driver's seat, i.e. at the bottom of Figure 3, the surface of the peripheral portion 25 is curved. A first distance h of the peripheral portion 25 measured along the z-axis, i.e. along the side wall 21, is less than or equal to the width w. The peripheral portion 25 is further defined by a second distance a between the peripheral edge 29 and the side wall 21 or a projection thereof. The measures of the width w, the first distance h and the second distance a depend on where along the peripheral portion 25 the measures are taken. Typical values are:
the width w: between 5 and 50 mm, preferably between 10 and 40 mm, most preferably between 15 and 35 mm,
the first distance h: between 5 and 50 mm, preferably between 10 and 40 mm, most preferably between 15 and 35 mm, and
the second distance a: between 0 and 20 mm, preferably between 5 and 15 mm, most preferably between 5 and 10 mm.

The top portions of Figures 3 and 4 show the upper portion of the airbag cover 11, the upper portion referring to when the steering wheel 9 is in a neutral position, as previously mentioned. In this position the peripheral portion 25 is so wide that the peripheral edge 29 projects longer than the height of the side wall 21 and also beyond a base portion 30 of the casing 19. The second distance a is thus defined between the peripheral edge 29 and a projection of the side wall 21.

The abutment member 31 extends between an underside 33 of the peripheral portion 25 and the side wall 21. The underside 33 of the peripheral portion 25 is the side facing the side wall 21. Hence, if the user of the vehicle 1 happens to press on the peripheral portion 25 of the airbag cover 11, it will not give way. Instead, the peripheral portion 25 will abut on the side wall 21 by means of the abutment member 31, since the force is transferred via the abutment member 31 to the side wall 21. In the illustrated embodiment, the abutment member 31 supports about 70% of the width w of the peripheral portion 25, the width being measured at the location of the abutment member 31. In other embodiments at least 30%, preferably at least 50%, more preferably at least 70% and most preferably at least 90% of the width w may be supported. The peripheral edge 29 is unsupported in the illustrated embodiment, even if it, as an option, would be possible to support the peripheral edge 29 by the abutment member 31 as well. In the illustrated embodiment, the edge of the abutment member 31 is substantially perpendicular to the side wall 21 when seen in the illustrated cross-section. However, the edge may also meet the side wall 21 at an oblique angle. For example, the edge may extend from a location adjacent to the peripheral edge 29 towards the edge of the side wall 21.

The abutment member 31 of the illustrated embodiment is substantially two-dimensional. Its surface is substantially perpendicular to a surface of the side wall 21 and a surface of the underside 33 of the peripheral portion 25. The surface of the substantially two-dimensional abutment member 31 has the shape of a acute-angled triangle in order to fit as a wedge between the underside 33 of the peripheral portion 25 and the side wall 21.

The abutment member 31 comprises a first snap fit member 35 being an integral part of the abutment member 31, as illustrated in the detailed view to the left in Figure 3. There is also a corresponding, in this case a receiving, second snap fit member 37 located at the casing 19, e.g. being an integral part of a side portion 39 of the casing 19. Further, the abutment member 31 forms an integral part with the peripheral portion 25. The abutment member 31 may be attached to the peripheral portion 25 by means of welding, gluing or an attachment means, such as a screw, a rivet or an attachment means formed in one unit with the airbag cover 11. However, in a preferred embodiment, the airbag cover 11 is made of thermo-moulded plastics, and the abutment member 31 is thus moulded as an integral unit of the peripheral portion 25. The peripheral portion 25 may thus be snap-fitted to the side portion 39 of the casing 19 by means of the first snap fit member 35 and the second snap fit member 37.

In the illustrated embodiment, the side wall 21 is partly located inside the side portion 39 of the casing 19. The side wall 21 is attached to the side portion 39 by means of welding, gluing or an attachment means, such as a screw, a rivet or an attachment means formed in one unit with the casing 19 and/or the cover 11 (not illustrated). Consequently, the peripheral portion 25 abuts via the abutment member 31 against the side wall 21 and the side portion 39 of the casing 19.

Thanks to the snap fit members 35, 37, the abutment member 31 will not only be able to transfer a force applied to the peripheral portion 25 to the side wall 21, thereby preventing that the peripheral portion 25 is displaced towards the side wall 21, but it will also, in addition, be able to function as a retaining member adapted to prevent the peripheral portion 25 from being displaced in a direction away from the side wall 21. If the vehicle 1 is exposed to sunshine, there may be thermal tension built up in the airbag cover 11, especially if the airbag cover 11 has a dark colour, e.g. black. Such thermal tension will induce an internal force in the airbag cover 11, which could cause the airbag cover 11 to bend away from the side wall 21, i.e. upwards in Figure 3. However, thanks to the snap fit members 35, 37, the abutment member 31 will be able to retain the peripheral portion 25 in the intended position.

In addition, the snap fit members 35, 37 are helpful when assembling the airbag housing assembly 17, e.g. during manufacturing of the vehicle 1 or when manufacturing a subunit of the vehicle 1 such as a steering wheel assembly 3, since the airbag cover 11 may be put on to the casing 19, or the casing 19 may be put on to the airbag cover 11, or both may be put on to each other, such that the side portion 39 of the casing 19 passes between the peripheral portion 25 and the side wall 21. Then the side wall 21 is attached to the side portion 39 of the casing 19, e.g. by means of welding, gluing or an attachment means, such as a screw, a rivet or an attachment means formed in one unit with the casing 19 and/or the cover 11 (not illustrated). Thereafter the abutment member 31 is attached to the side portion 39 of the casing 19, e.g. snap-fitted by connecting the snap fit members 35, 37 to each other, or the abutment member 31 may be slid into a receiving slot of the side portion 39 or vice versa. See detailed views to the left of Figures 3 and 4.

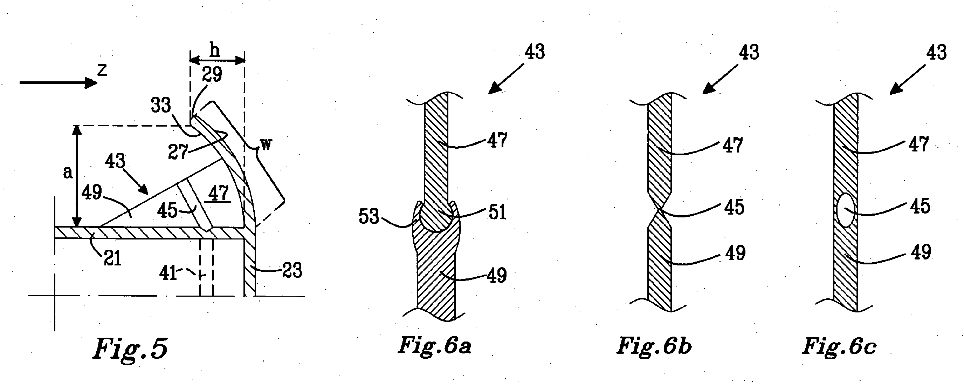

A split line 41 in the side wall 21 and abutment members 43 located at the right-hand side of Figure 3 are described below in conjunction with Figure 5.

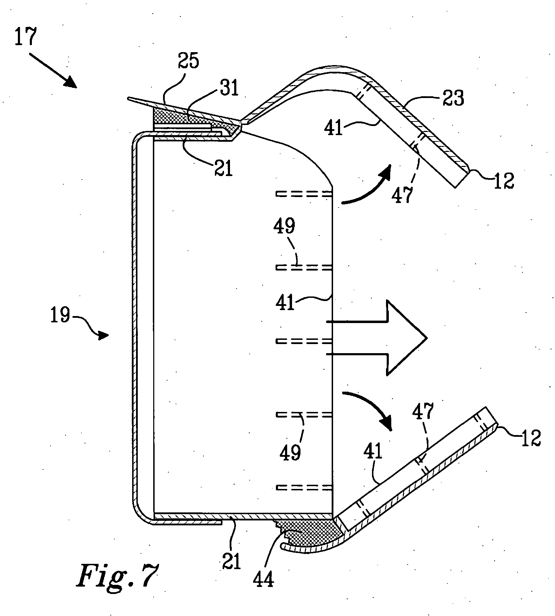

The lower portion of Figures 3 and 4 show the lower portion of the airbag cover 11, the lower portion referring to when the steering wheel 9 is in a neutral position, as previously mentioned. The lower portion of the airbag cover 11 is thus the portion being closest to the driver of the vehicle 1. In this position the peripheral portion 25 is curved, such that w>h and w>a. The lower portion comprises one or more abutment members 44. When the airbag cover 11 is opened during inflation of the airbag 5, as is described below in conjunction with Figure 7, this lower portion will form a hinge for the opening airbag cover 11 or for a portion of the airbag cover 11, e.g. a lower half. The abutment members 44 will then be compressed by the moving peripheral portion 25, such that they are deformed. The abutment members 44 may comprise a weakening zone in order to be more easily deformed. As an alternative, or a complement, there may be a weakening zone in the side wall 21, in the hinge-forming portion, such that the side wall 21 is more easily deformed in this region.

Instead of, or in addition to, using a substantially two-dimensional abutment member 31 as in the embodiment of Figures 3-4, a prop-shaped abutment member may be used, which is however not illustrated. The prop may be in the form of a pillar or a beam. It may have the shape of a cylinder. It may have an arbitrary cross-section, e.g. circular, elliptic, square or polygonal. The prop-shaped abutment member preferably extends from a position of the peripheral portion 25 being a distance of at least 30%, preferably at least 50%, more preferably at least 70% and most preferably at least 90% of the width w away from the point where the peripheral portion 25 meets the side wall 21. Similarly, the prop-shaped abutment member is connected to the side wall 21 at a point being a distance of at least 30%, preferably at least 50%, more preferably at least 70% and most preferably at least 90% of the width w away from a location where the peripheral portion 25 meets the side wall 21. A suitable position of the prop-shaped abutment member is thus a position corresponding to the free edge of the substantially two-dimensional surface of the abutment members 31, 43, 44 of Figure 3.

Figure 5 shows a detailed view of the cross-section along line V - V of Figure 4, i.e. along the direction of the y-axis, showing one of the abutment members 43. As already mentioned, the width w of the peripheral portion 25 is measured along the upper side 27 of the surface, which in this cross-section is curved. Therefore the first distance h of the peripheral portion 25 is less than the width w. The first distance h is measured along the z-axis. The peripheral portion 25 is further defined by the second distance a between the peripheral edge 29 and the side wall 21, with the second distance a also being less than the width w.

The side wall 21 comprises a split line 41, e.g. a weakening zone. The weakening zone may have less thickness than the adjacent wall zones or it may comprise holes, such that a pre-determined breaking line is defined in the side wall 21. The abutment member 43 comprises a split line 45 at a corresponding location to the split line 41 of the side wall 21.

In the illustrated embodiment, the abutment member 43 supports about 60% of the width w of the peripheral portion 25. In other embodiments at least 30%, preferably at least 50%, more preferably at least 70% and most preferably at least 90% of the width w may be supported: The peripheral edge 29 is unsupported in the illustrated embodiment, even if it as an option would be possible to support the peripheral edge 29 as well.

The abutment member 43 is substantially two-dimensional and its surface is generally shaped as a sector of a circle in order to fit in between the underside 33 of the peripheral portion 25 and the side wall 21. The surface of the abutment member 43 is substantially perpendicular to a surface of the side wall 21 and a surface of the underside 33 of the peripheral portion 25. A substantially two-dimensional object has a flat surface having a length and/or a width, which are substantially larger than its thickness. Purely as an example, a substantially two-dimensional abutment member 43 may have a thickness between 0 and 2 mm, and a length and width of between 5 and 50 mm. This is also valid for the abutment member 31 described in conjunction with Figures 3-4.

As an alternative, the abutment member 43 could support against the side wall 21 above the split line 41, i.e. closer to where the side wall 21 meets the top portion 23. However, since the split line 41 usually is located at or adjacent to the upper edge of the side wall 21, there is a risk that the support of the peripheral portion 25 would not be good enough. By adjacent is typically meant being anywhere between 0 and 20 mm from the upper edge. It is thus preferred to support against the side wall 21 below the split line 41, or more preferably supporting both above and below the split line 41, as in the illustrated embodiment.

The abutment member 43 illustrated in Figure 5 comprises a first part 47 and a second part 49, which may be snap-fitted to each other by means of a first and a second snap fit member 51, 53, as illustrated in Figure 6a. The split line 45 is then located in the snap fit it between the parts 47, 49. The surfaces of the respective parts 47, 49 are substantially parallel to each other, such that the abutment member 43 is suitable for transferring a force applied to the peripheral portion 25 to the side wall 21.

The first part 47 of the abutment member 43 forms one unit with the peripheral portion 25. The first part 47 may be attached to the peripheral portion 25 by means of welding, gluing or an attachment means, such as a screw, a rivet or an attachment means formed in one unit with the cover 11. However, in a preferred embodiment, the airbag cover 11 is made of thermo-moulded plastics, and the first part 47 is thus moulded as an integral unit of the peripheral portion 25.

In a similar way, the second part 49 of the abutment member 43 forms one unit with the side wall 21. The second part 49 may be attached to the side wall 21 by means of welding, gluing or an attachment means, such as a screw, a rivet or an attachment means formed in one unit with the cover 11. However, in a preferred embodiment, the airbag cover 11 is made of thermo-moulded plastics, and the second part 49 is thus moulded as an integral unit of the side wall 21. The snap fit between the parts 47, 49 by means of the first and second snap fit members 51, 53 makes it possible for the abutment member 43 to also act as retaining member, similar as to what is described above in conjunction with Figures 3 and 4.

As an alternative to the abutment member 43 comprising the two parts 47, 49, the abutment member 43 may comprise only one part, which has a weakening zone forming the split line 45, e.g. having a reduced thickness as in Figure 6b or comprising a hole as in Figure 6c.

Further, even if the abutment member 43 is illustrated as being substantially two-dimensional, it may have the form of a prop. In that case, the prop-shaped abutment member preferably extends from a position of the peripheral portion 25 being a distance at least 30%, preferably at least 50%, more preferably at least 70% and most preferably at least 90% of the width w away from the point where the peripheral portion 25 joins the side wall 21. Similarly, the prop-shaped abutment member is connected to the side wall 21 at a point being a distance of at least 30%, preferably at least 50%, more preferably at least 70% and most preferably at least 90% of the width w away from the point where the peripheral portion 25 joins the side wall 21. A suitable position of the prop-shaped abutment member is thus a position corresponding to the free edge of the sector of the circle forming the surface of the substantially two-dimensional abutment member 43 of Figure 5.

If a collision system of the vehicle 1 detects a collision or an imminent collision, the airbag 5 may be inflated. The inflating airbag 5 then presses against the airbag cover 11, causing the airbag cover 11 to open, in the illustrated embodiment along the split line 41 of the side wall 21 and along the predefined weakening zone 12 of the top portion 23. See Figure 7. A side of the airbag cover 11 may in that case form a hinge, i.e. the side wall 21 or the top portion 23 is at that location adapted to bend like a hinge. In the illustrated embodiment, the airbag cover 11 opens in two portions, approximately halves of the top portion 23. Each portion has a corresponding hinge-forming portion, at the upper portion and at the lower portion of Figure 7, respectively. In the upper portion, the hinge is formed adjacent to the location, where the side wall 21 meets the top portion 23. At the lower portion the hinge is formed in a location of the side wall 21 corresponding to the split line 41. The use of a predetermined split line 41 in the side wall 21 and the predefined weakening zone 12 allows the airbag cover 11 to open in a controlled, predictable manner allowing the airbag 5 to be deployed in a controlled, predictable manner. In other embodiments the airbag cover may open in one, two, three, four or more portions having a corresponding number of hinge-forming portions.

The abutment member 31 described above in conjunction with Figure 3 is appropriate to use for a portion of the side wall 21 having no split line 41 and/or a wide peripheral portion 25, e.g. the above-mentioned hinge-forming portion at the upper portion of the airbag cover 11. Since the hinge is formed in this location, there is no use for a split line 41 of the side wall 21 and hence there is no use for a split line in the abutment member 31 either at this location. The abutment member 31 may be located below the hinge-forming portion. As another alternative, the abutment member 31 may at least in the hinge-forming portion of the airbag cover 11 comprise a weakening zone, similar as for the abutment member 43 described in conjunction with Figure 6b, and/or the abutment member 31 may be configured to be easily deformable during deployment of the airbag.

The lower portion of the airbag cover 11 comprises one or more abutment members 44, as mentioned above. When the airbag cover 11 is opened to allow inflation of the airbag 5, this lower portion will form another hinge for the opening portion of the airbag cover 11. Since the hinge is formed in this location, there is no use for a split line and hence there is no use for a split line in the abutment member 44 either. Instead, the abutment members 44 will be compressed by the moving peripheral portion 25 and deformed. The abutment members 44 may comprise a weakening zone in order to be more easily deformed. As an alternative, or a complement, there may be a weakening zone in the side wall 21, in the hinge-forming portion, such that the side wall is more easily deformed in this region.

For a portion of the side wall 21 comprising a split line 41, e.g. the left-hand portion or the right-hand portion of Figure 2a, the abutment member 43 comprising the split line 45, as shown in the detailed view of Figure 5, is appropriate. Hence, when the airbag 5 is being inflated, the airbag cover 11 splits along the split line 41 at the same time as the abutment member 43 splits along its split line 45.

In an alternative embodiment, which is not illustrated, the airbag cover 11 may open as one unit. In that case, one hinge-forming portion is enough, e.g. located at the upper portion of the airbag cover 11. In that case, abutment members 43 including split lines 45 can be used for the rest of the circumference of the peripheral portion 25.

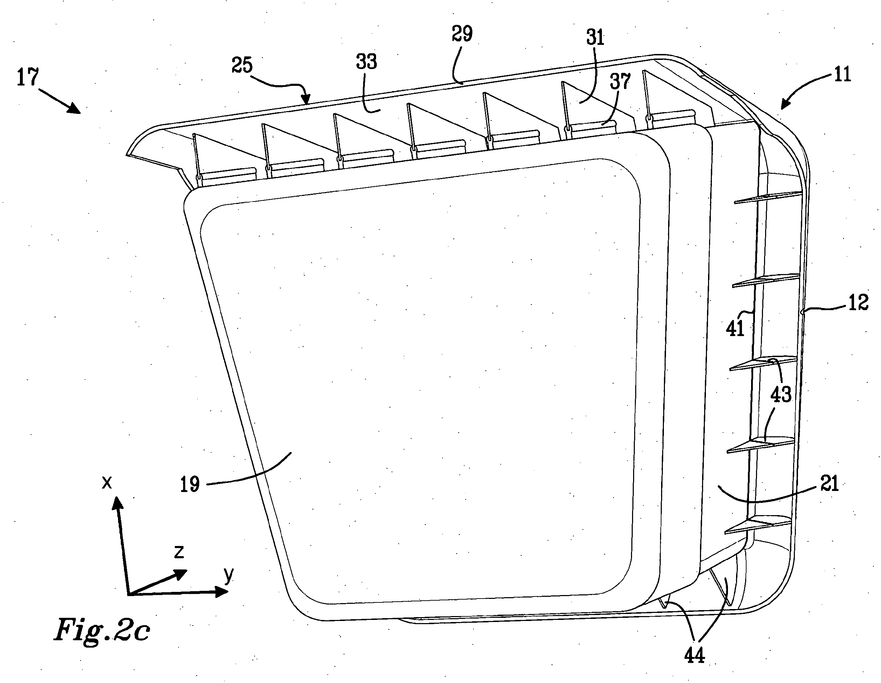

When seen along the periphery of the airbag cover 11, there is provided a plurality of abutment members 31, 43, 44, which is most easily seen in Figure 2c. They may be located by an interspace in the range of 5 to 150 mm, preferably 10 to 50 mm. In a most preferred embodiment, the abutment members 31, 43, 44 are interspaced by a distance corresponding to the width of an average human thumb. The abutment members 31, 43, 44 may be closer to each other, at portions of the airbag cover 11, where it is more likely that the user could happen to apply pressure to the peripheral portion 25 and/or where it is more likely that high thermal tension may be built up. Further, there may be no abutment members in the region of the hinge-forming portion. Alternatively, the abutment members may there locally be located below the hinge-forming portion. As another alternative, the abutment member may locally, at least in the hinge-forming portion of the airbag cover 11, comprise a weakening zone or may be configured to be easily deformable during deployment of the airbag.

As already mentioned above, the abutment member 43 as described for Figure 4 is preferred for portions of the peripheral portion 25, wherein the facing side wall 21 comprises a split line 41, while the abutment member 31 as described for Figure 3 is preferred for the for portions of the peripheral portion 25, wherein the peripheral portion 25 is wider than for the rest of the peripheral portion 25, e.g. at the upper portion of the airbag cover 11, the upper portion referring to when the steering wheel 9 is in a neutral position, as illustrated in Figure 1. The abutment member 44 is suitable for a hinge-forming portion of the airbag cover 11, e.g. at the lower portion of the airbag cover 11, the lower portion referring to when the steering wheel 9 is in a neutral position.

If the steering wheel assembly 3 is provided with the horn arrangement mentioned above, which may be activated by applying a force to the airbag cover 11, there is a risk that the activation force is applied to airbag cover 11 at the peripheral portion 25 or at an oblique angle. By using an abutment member 31, 43, 44 as in the present invention, there is a reduced risk that the horn arrangement will not function properly.

Even if the above embodiments describes an airbag 5 for the steering wheel 9, it may also be useful to provide abutment members in an airbag cover of another type of airbag, e.g. a knee airbag 14 or a side airbag, for which it may occur that the user of the vehicle 1 happens to apply pressure to the peripheral portion of the airbag cover. The abutment member will in that case help to transfer the force from the peripheral portion 25 to the side wall 21, such that the peripheral portion 25 is not deformed.

An airbag cover according to the description may comprise only abutment members of the type having no split line. Further, another airbag cover according to the description may comprise only abutment members of the type having a split line. There may also be a combination of abutment members with and without split line as in the illustrated embodiment.

Further modifications of the invention within the scope of the appended claims are feasible. As such, the present invention should not be considered as limited by the embodiments and figures described herein. Rather, the full scope of the invention should be determined by the appended claims, with reference to the description and drawings.

## Claims

1. An airbag housing assembly (17) comprising an airbag cover (11) and a casing (19) forming a bottom of said airbag housing assembly (17),
said airbag cover (11) comprising a side wall (21), a top portion (23) and a peripheral portion (25), said side wall (21) forming an at least substantially closed circumference,
said top portion (23) forming a cover of said at least substantially closed circumference,
said peripheral portion (25) extending external of said side wall (21) along at least a part of a circumference of said side wall (21), thereby forming an extension of
said top portion (23),
said airbag cover (11) further comprising at least one abutment member (31, 43, 44), which extends between an underside (33) of said peripheral portion (25) and
said side wall (21), such that said peripheral portion (25) abuts against said side wall (21) via said at least one abutment member (31, 43, 44), at least when a force is applied to said peripheral portion (25),
**characterized in that**
a side portion (39) of said casing (19) is at least partly located between said at least one abutment member (31) and said side wall (21) of said airbag cover (11),
said side portion (39) of said casing (19) being adapted for receiving said at least one abutment member (31), said peripheral portion (25) thereby abutting against
said side wall (21) via said at least one abutment member (31) and said side portion (39) of said casing (19).

2. The airbag housing assembly (17) according to claim 1, wherein said at least one abutment member (31, 43, 44) is an integral part of said airbag cover (11), e.g. by being manufactured as one unit.

3. The airbag housing assembly (17) according to any one of the preceding claims, wherein said peripheral portion (25) has a width (w) and abuts via said at least one abutment member (31, 43, 44) along at least 30%, preferably at least 50%, more preferably at least 70% and most preferably at least 90% of said width (w).

4. The airbag housing assembly (17) according to any one of the preceding claims, wherein said peripheral portion (25) abutting via said at least one abutment

5. The airbag housing assembly (17) according to any one of the preceding claims, wherein said at least one abutment member (31, 43, 44) further is adapted to function as a retaining member, adapted to prevent said peripheral portion (25) from moving in a direction away from said side wall (21).

6. The airbag housing assembly (17) according to any one of the preceding claims, wherein one of said at least one abutment member (31, 43), said side wall (21) or said peripheral portion (25) comprises a first snap fit member (35, 51) adapted for connection to another of said at least one abutment member (31, 43), said side wall (21) or said peripheral portion (25) comprising a corresponding second snap fit member (37, 53).

7. The airbag housing assembly (17) according to any one of the preceding claims, wherein said airbag cover (11) further comprises at least one split line (41) formed in said side wall (21), preferably at, or adjacent to, an upper edge of said side wall (21), said at least one abutment member (31, 43, 44) abutting against said side wall (21) at least in a region below said split line (41) in said side wall (21).

8. The airbag housing assembly (17) according to claim 7, wherein also said at least one abutment member (43) comprises a split line (45), e.g. a weakening zone.

9. The airbag housing assembly (17) according to any one of the preceding claims, wherein said at least one abutment member (43) comprises at least two parts (47, 49) connectable to each other, e.g. being snap-fittable to each other or adapted to be slid into each other, such that when said two parts (47, 49) are connected, said peripheral portion (25) abuts against said side wall (21) via said two parts (47, 49).

10. The airbag housing assembly (17) according to any one of the preceding claims, wherein said at least one abutment member (31, 43, 44) is substantially two-dimensional, the surface of said at least one substantially two-dimensional abutment member (31, 43) being substantially perpendicular to a surface of said side wall (21) and/or a surface of said peripheral portion (25).

11. The airbag housing assembly (17) according to any one of claims 1-9, wherein said at least one abutment member comprises a prop extending between said side wall (21) and said underside of said peripheral portion (25).

12. The airbag housing assembly (17) according to claim 11, wherein said side portion (39) of said casing (19) and/or said peripheral portion (25) is adapted to snap fit with or slide onto said at least one abutment member (31).

13. A vehicle (1) comprising a steering wheel assembly (3), an airbag (5) and an airbag housing assembly (17) according to any one of the preceding claims, said airbag (5) being located in said steering wheel assembly (3) of said vehicle (1).

14. A method of assembling an airbag housing assembly (17) according to any one of the preceding claims, said airbag housing assembly (17) comprising an airbag cover (11) and a casing (19) forming a bottom of said airbag housing assembly (17), said method comprising:
- putting said airbag cover (11) onto said casing (19) or vice versa, such that at least a part of a peripheral portion (25) of said airbag cover (11) passes outside of a side portion (39) of said casing (19), and a side wall (21) of said airbag cover (11), which faces said part of said peripheral portion (25), passes inside of said side portion (39) of said casing (19),
- attaching said side wall (21) of said airbag cover (11) to said side portion (39) of said casing (19), e.g. by means of welding, gluing or an attachment means, and
- attaching at least one abutment member (31, 43, 44), which is located at an underside (33) of said peripheral portion (25), to said side portion (39) of said casing (19), e.g. by snap-fitting or sliding into each other.

## Patentansprüche

1. Airbag-Gehäuseeinrichtung (17), umfassend eine Airbag-Abdeckung (11) und eine Umhüllung (19), die eine Unterseite der Airbag-Gehäuseeinrichtung (17) bilden,
wobei die Airbag-Abdeckung (11) eine Seitenwand (21), einen oberen Abschnitt (23) und einen Umfangsabschnitt (25) umfasst, wobei die Seitenwand (21) einen im Wesentlichen geschlossenen Außenumfang bildet,
wobei der obere Abschnitt (23) eine Abdeckung des mindestens im Wesentlichen geschlossenen Außenumfangs bildet,
wobei sich der Umfangsabschnitt (25) außerhalb der Seitenwand (21) entlang mindestens eines Teils eines Außenumfangs der Seitenwand (21) erstreckt und dadurch eine Erweiterung des oberen Abschnitts (23) bildet,
wobei die Airbag-Abdeckung (11) ferner mindestens ein Anlageelement (31, 43, 44) umfasst, das sich zwischen einer Unterseite (33) des Umfangsabschnitts (25) und der Seitenwand (21) erstreckt, sodass der Umfangsabschnitt (25) an der Seitenwand (21) über das mindestens eine Anlageelement (31, 43, 44) anliegt, zumindest, wenn eine Kraft an den Umfangsabschnitt (25) angelegt wird, **dadurch gekennzeichnet, dass**
ein Seitenabschnitt (39) der Umhüllung (19) mindestens teilweise zwischen dem mindestens einen Anlageelement (31) und der Seitenwand (21) der Airbag-Abdeckung (11) angeordnet ist, wobei der Seitenabschnitt (39) der Umhüllung (19) zur Aufnahme des mindestens einen Anlageelements (31) ausgelegt ist, wodurch der Umfangsabschnitt (25) an der Seitenwand (21) über das mindestens eine Anlageelement (31) und die Seitenabschnitte (39) der Umhüllung (19) anliegt.

2. Airbag-Gehäuseeinrichtung (17) nach Anspruch 1, wobei das mindestens eine Anlageelement (31, 43, 44) ein Bestandteil der Airbag-Abdeckung (11) ist, z. B. einstückig gefertigt ist.

3. Airbag-Gehäuseeinrichtung (17) nach einem der vorhergehenden Ansprüche, wobei der Umfangsabschnitt (25) eine Breite (w) aufweist und über mindestens ein Anlageelement (31, 43, 44) entlang mindestens 30%, vorzugsweise mindestens 50%, mehr bevorzugt mindestens 70% und am meisten bevorzugt mindestens 90% der Breite (w) anliegt.

4. Airbag-Gehäuseeinrichtung (17) nach einem der vorhergehenden Ansprüche, wobei der Umfangsabschnitt (25), der über mindestens ein Anlageelement (31, 43, 44) anliegt, einen freien Umfangsrand (29) umfasst.

5. Airbag-Gehäuseeinrichtung (17) nach einem der vorhergehenden Ansprüche, wobei das mindestens eine Anlageelement (31, 43, 44) ferner ausgelegt ist, um als Halterung zu dienen, die ausgelegt ist, um zu verhindern, dass sich der Umfangsabschnitt (25) in einer Richtung weg von der Seitenwand (21) bewegt.

6. Airbag-Gehäuseeinrichtung (17) nach einem der vorhergehenden Ansprüche, wobei eines des mindestens einen Anlageelements (31, 43), der Seitenwand (21) oder des Umfangsabschnitts (25) ein erstes Schnappelement (35, 51) aufweist, das zum Verbinden mit dem anderen von mindestens einem Anlageelement (31, 43), einer Seitenwand (21) oder einem Umfangsabschnitt (25) ausgelegt ist, die ein entsprechendes zweites Schnappelement (37, 53) umfassen.

7. Airbag-Gehäuseeinrichtung (17) nach einem der vorhergehenden Ansprüche, wobei die Airbag-Abdeckung (11) ferner mindestens eine Trennlinie (41), die in der Seitenwand (21) ausgebildet ist, vorzugsweise in oder angrenzend an einen oberen Rand der Seitenwand (21), umfasst, wobei das mindestens eine Anlageelement (31, 43, 44) an der Seitenwand (21) mindestens in einem Bereich unterhalb der Trennlinie (41) an der Seitenwand (21) anliegt.

8. Airbag-Gehäuseeinrichtung (17) nach Anspruch 7,
wobei auch das mindestens eine Anlageelement (43) eine Trennlinie (45) umfasst, z. B. eine Schwächungszone.

9. Airbag-Gehäuseeinrichtung (17) nach einem der vorhergehenden Ansprüche, wobei das mindestens eine Anlageelement (43) mindestens zwei Teile (47, 49) umfasst, die miteinander verbunden werden können, z. B. ineinander einschnappen oder ausgelegt sind, um ineinander geschoben zu werden, sodass, wenn die zwei Teile (47, 49) verbunden werden, der Umfangsabschnitt (25) an der Seitenwand (21) über die zwei Teile (47, 49) anliegt.

10. Airbag-Gehäuseeinrichtung (17) nach einem der vorhergehenden Ansprüche, wobei das mindestens eine Anlageelement (31, 43, 44) im Wesentlichen zweidimensional ist, wobei die Oberfläche des im Wesentlichen zweidimensionalen Anlageelements (31, 43) im Wesentlichen senkrecht zu einer Oberfläche der Seitenwand (21) und/oder einer Oberfläche des Umfangsabschnitts (25) verläuft.

11. Airbag-Gehäuseeinrichtung (17) nach einem der Ansprüche 1 bis 9, wobei das mindestens eine Anlageelement eine Stütze umfasst, die sich zwischen der Seitenwand (21) und der Unterseite des Umfangsabschnitts (25) erstreckt.

12. Airbag-Gehäuseeinrichtung (17) nach Anspruch 11,
wobei der Seitenabschnitt (39) des Gehäuses (19) und/oder der Umfangsabschnitt (25) ausgelegt sind, um in das mindestens eine Anlageelement (31) einzuschnappen oder darauf geschoben zu werden.

13. Fahrzeug (1), umfassend eine Lenkradanordnung (3), einen Airbag (5) und eine Airbag-Gehäuseeinrichtung (17) nach einem der vorhergehenden Ansprüche, wobei der Airbag (5) in der Lenkradanordnung (3) des Fahrzeugs (1) angeordnet ist.

14. Verfahren zum Zusammenbauen einer Airbag-Gehäuseeinrichtung (17) nach einem der vorhergehenden Ansprüche, wobei die Airbag-Gehäuseeinrichtung (17) eine Airbag-Abdeckung (11) und eine Umhüllung (19) umfasst, die eine Unterseite der Airbag-Gehäuseeinrichtung (17) bilden, wobei das Verfahren umfasst:
- Aufsetzen der Airbag-Abdeckung (11) auf die Umhüllung (19) oder umgekehrt, so dass mindestens ein Teil eines Umfangsabschnitts (25) der Airbag-Abdeckung (11) außerhalb eines Seitenabschnitts (39) der Umhüllung (19) verläuft und eine Seitenwand (21) der Airbag-Abdeckung (11), die zu einem Teil des Umfangsabschnitts (25) weist, innerhalb des Seitenabschnitts (39) der Umhüllung (19) verläuft,
- Befestigen der Seitenwand (21) der Airbag-Abdeckung (11) am Seitenabschnitt (39) der Umhüllung (19), z. B. durch Schweißen, Kleben oder ein Befestigungsmittel, und
- Befestigen mindestens eines Anlageelements (31, 43, 44), das an einer Unterseite (33) des Umfangsabschnitts (25) angeordnet ist, am Seitenabschnitt (39) der Umhüllung (19), z.B. durch Einschnappen oder Ineinanderschieben.

## Revendications

1. Ensemble logement de coussin de sécurité gonflable (17) comprenant un couvercle de coussin de sécurité gonflable (11) et un boîtier (19) formant un fond dudit ensemble logement de coussin de sécurité gonflable (17),
ledit couvercle de coussin de sécurité gonflable (11) comprenant une paroi latérale (21), une partie supérieure (23) et une partie périphérique (25), ladite paroi latérale (21) formant une circonférence au moins en grande partie close, ladite partie supérieure (23) formant un couvercle de ladite circonférence au moins en grande partie close,
ladite partie périphérique (25) s'étendant à l'extérieur de ladite paroi latérale (21) le long d'au moins une partie d'une circonférence de ladite paroi latérale (21), de façon à former ainsi un prolongement de ladite partie supérieure (23),
ledit couvercle de coussin de sécurité gonflable (11) comprenant en outre au moins un organe d'accolement (31, 43, 44), qui s'étend entre une face inférieure (33) de ladite partie périphérique (25) et ladite paroi latérale (21), de telle sorte que ladite partie périphérique (25) soit accolée à ladite paroi latérale (21) par le biais dudit ou desdits organes d'accolement (31, 43, 44), au moins lorsqu'une force est appliquée à ladite partie périphérique (25),
**caractérisé en ce que**
une partie latérale (39) dudit boîtier (19) est au moins partiellement située entre ledit ou lesdits organes d'accolement (31) et ladite paroi latérale (21) dudit couvercle de coussin de sécurité gonflable (11), ladite partie latérale (39) dudit boîtier (19) étant conçue pour recevoir ledit ou lesdits organes d'accolement (31), ladite partie périphérique (25) étant ainsi accolée à ladite paroi latérale (21) par le biais dudit ou desdits organes d'accolement (31) et de ladite partie latérale (39) dudit boîtier (19).

2. Ensemble logement de coussin de sécurité gonflable (17) selon la revendication 1, dans lequel ledit ou lesdits organes d'accolement (31, 43, 44) font partie intégrante dudit couvercle de coussin de sécurité gonflable (11), par ex. sont fabriqués d'un seul tenant.

3. Ensemble logement de coussin de sécurité gonflable (17) selon l'une quelconque des revendications précédentes, dans lequel ladite partie périphérique (25) présente une largeur (w) et est accolée par le biais dudit ou desdits organes d'accolement (31, 43, 44) le long d'au moins 30 %, de préférence d'au moins 50 %, plus préférablement d'au moins 70 % et le plus préférablement d'au moins 90 % de ladite largeur (w).

4. Ensemble logement de coussin de sécurité gonflable (17) selon l'une quelconque des revendications précédentes, dans lequel ladite partie périphérique (25) accolée par le biais dudit ou desdits organes d'accolement (31, 43, 44) comprend un bord périphérique libre (29).

5. Ensemble logement de coussin de sécurité gonflable (17) selon l'une quelconque des revendications précédentes, dans lequel ledit ou lesdits organes d'accolement (31, 43, 44) sont en outre conçus pour faire fonction d'organe de retenue, conçus pour empêcher ladite partie périphérique (25) de se déplacer dans une direction s'éloignant de ladite paroi latérale (21).

6. Ensemble logement de coussin de sécurité gonflable (17) selon l'une quelconque des revendications précédentes, dans lequel ledit ou lesdits organes d'accolement (31, 43), ladite paroi latérale (21) ou ladite partie périphérique (25) comprennent un premier organe d'emboîtage élastique (35, 51) conçu en vue d'un raccordement à un autre élément parmi ledit ou lesdits organes d'accolement (31, 43), ladite paroi latérale (21) ou ladite partie périphérique (25) comprenant un second organe d'emboîtage élastique (37, 53) correspondant.

7. Ensemble logement de coussin de sécurité gonflable (17) selon l'une quelconque des revendications précédentes, dans lequel ledit couvercle de coussin de sécurité gonflable (11) comprend en outre au moins une ligne de séparation (41) formée dans ladite paroi latérale (21), de préférence au niveau, ou à proximité, d'un bord supérieur de ladite paroi latérale (21), ledit ou lesdits organes d'accolement (31, 43, 44) étant accolés à ladite paroi latérale (21) au moins dans une région située en dessous de ladite ligne de séparation (41) dans ladite paroi latérale (21).

8. Ensemble logement de coussin de sécurité gonflable (17) selon la revendication 7, dans lequel en outre ledit ou lesdits organes d'accolement (43) comprennent une ligne de séparation (45), par ex. une zone d'affaiblissement.

9. Ensemble logement de coussin de sécurité gonflable (17) selon l'une quelconque des revendications précédentes, dans lequel ledit ou lesdits organes d'accolement (43) comprennent au moins deux parties (47, 49) pouvant être raccordées l'une à l'autre, par ex. pouvant être emboîtées de manière élastique l'une dans l'autre ou étant conçues pour être adaptées l'une dans l'autre de manière coulissante, de telle sorte que, lorsque lesdites deux parties (47, 49) sont raccordées, ladite partie périphérique (25) s'accole à ladite paroi latérale (21) par le biais desdites deux parties (47, 49).

10. Ensemble logement de coussin de sécurité gonflable (17) selon l'une quelconque des revendications précédentes, dans lequel ledit ou lesdits organes d'accolement (31, 43, 44) sont essentiellement bidimensionnels, la surface dudit ou desdits organes d'accolement (31, 43) essentiellement bidimensionnels étant essentiellement perpendiculaire à une surface de ladite paroi latérale (21) et/ou à une surface de ladite partie périphérique (25).

11. Ensemble logement de coussin de sécurité gonflable (17) selon l'une quelconque des revendications 1 à 9, dans lequel ledit ou lesdits organes d'accolement comprennent un support s'étendant entre ladite paroi latérale (21) et ladite face inférieure de ladite partie périphérique (25).

12. Ensemble logement de coussin de sécurité gonflable (17) selon la revendication 11, dans lequel ladite partie latérale (39) dudit boîtier (19) et/ou ladite partie périphérique (25) sont conçues pour s'emboîter de manière élastique avec ledit ou lesdits organes d'accolement (31) ou pour s'adapter sur ledit ou lesdits organes d'accolement (31) de manière coulissante.

13. Véhicule (1) comprenant un ensemble volant de direction (3), un coussin de sécurité gonflable (5) et un ensemble logement de coussin de sécurité gonflable (17) selon l'une quelconque des revendications précédentes, ledit airbag (5) étant situé dans ledit ensemble volant de direction (3) dudit véhicule (1).

14. Procédé d'assemblage d'un ensemble logement de coussin de sécurité gonflable (17) selon l'une quelconque des revendications précédentes, ledit ensemble logement de coussin de sécurité gonflable (17) comprenant un couvercle de coussin de sécurité gonflable (11) et un boîtier (19) formant un fond dudit ensemble logement de coussin de sécurité gonflable (17), ledit procédé comprenant :
- placer ledit couvercle de coussin de sécurité gonflable (11) sur ledit boîtier (19) ou vice versa, de telle sorte qu'au moins une partie d'une partie périphérique (25) dudit couvercle de coussin de sécurité gonflable (11) passe à l'extérieur d'une partie latérale (39) dudit boîtier (19), et qu'une paroi latérale (21) dudit couvercle de coussin de sécurité gonflable (11), qui fait face à ladite partie de ladite partie périphérique (25), passe à l'intérieur de ladite partie latérale (39) dudit boîtier (19),
- fixer ladite paroi latérale (21) dudit couvercle de coussin de sécurité gonflable (11) à ladite partie latérale (39) dudit boîtier (19), par ex. par soudage, collage ou un moyen de fixation, et
- fixer au moins un organe d'accolement (31, 43, 44), qui se trouve au niveau d'une face inférieure (33) de ladite partie périphérique (25), à ladite partie latérale (39) dudit boîtier (19), par ex. par emboîtage élastique ou en les adaptant l'une dans l'autre de manière coulissante.
